## Europäisches Patentamt
## European Patent Office
## Office européen des brevets

(19)

(11) Publication number: **0 088 506**
A1

(12) # EUROPEAN PATENT APPLICATION

(21) Application number: 83300453.4

(22) Date of filing: 28.01.83

(51) Int. Cl.³: **B 65 G 59/00**, B 65 G 7/02, B 65 G 57/00, B 66 F 3/35

(30) Priority: 28.01.82 US 343460

(43) Date of publication of application: 14.09.83 Bulletin 83/37

(84) Designated Contracting States: AT BE CH DE FR GB IT LI NL SE

(71) Applicant: Dill, Melville Reese, Jr., 15 Carleton Road, Belmont Massachusetts 02178 (US)

(72) Inventor: Dill, Melville Reese, Jr., 15 Carleton Road, Belmont Massachusetts 02178 (US)

(74) Representative: Woodward, John Calvin et al, VENNER SHIPLEY & CO. 368 City Road, London EC1V 2QA (GB)

(54) Article separator for materials handling.

(57) Inflatable apparatus (10) which, in a deflated condition, can be inserted into vertical spaces between stacked articles (50) and which, in an inflated condition, vertically separates stacked articles (50) sufficiently for insertion between the stacked articles (50) or withdrawal therefrom of the forks (60) of a forklift (58). This apparatus (10) is particularly suited for handling loads which are stored on stickers (54) or dunnage having a minimal thickness. The apparatus includes an elongated, rigid skid (12), an inflatable bladder (14) secured to the skid, and valves (24, 26) for inflation and deflation of the bladder (14).

Article Separator for Materials Handling

This invention relates generally to handling of stacked articles or materials and more particularly concerns an apparatus for vertical separation of stacked articles or materials for insertion or withdrawal of the arms of a lifting device. The articles or materials, which may be of any form or kind normally stacked with separators therebetween, are in general referred to hereinafter as articles.

Articles are often stored or shipped by stacking them one on top of the other with only a thin dunnage or wooden stickers providing spacing therebetween. Common examples of such articles are lumber, plywood, hardboard or other unpalletized building materials, items of which are stacked for drying, storage or transportation and are vertically separated by wooden stickers which are approximately 2.5 cm. thick. These stickers are usually placed about 30 to 45 cm. apart along the length of the articles. The provision of the stickers allows for air circulation and stacks the load together. However, piles of such articles stacked in this manner, often weigh substantially more than the capacity of a standard forklift, and the entire pile cannot be moved at once. In addition, the piles of articles may at one facility be loaded onto vehicles with a forklift of a capacity sufficiently great to handle the entire stack while at another facility they are unloaded by a forklift having a lesser capacity. Most forklifts, especially those having capacities adequate to lift a stack of undried lumber, have fork arms which have a vertical thickness greater than the 2.5 cm. thickness of the stickers. As a result, the entire load must be lifted at once by the forklift or the pile must be loaded piecemeal by hand. In the past, in order to overcome the above problems, bolsters or other large dunnage have been placed under the bottom layer of lumber or other building materials, and/or at appropriate points between the layers. These bolsters are normally 10 cm. by 10 cm. by 12.5 cm. long timbers and are expensive and difficult to handle. In addition, the placement of these bolsters severely reduces the amount of lumber or building materials which may be stacked in a given height, thus restricting the capacity of the kiln or location where the material is stored.

Another commonly used solution to the above problem is to place the lumber or other building materials or the stacked articles on pallets. However, most conventional pallets which can be unloaded by a conventional forklift must have strong supporting stringers in order to carry the desired load and provide the 7.5 to 10 cm. clearance beneath the load necessary for fork entry, and the cost of such pallets is often too high to justify shipping it with the materials. In addition, the pallets must be stored with the goods, requiring additional storage space and significantly increasing storage costs. This cost problem in palletized materials is often overcome by the use of disposable pallets without stickers or stringers necessary to provide the desired clearance and which may be formed of corrugated materials. An example of such pallets is described in U.S. Patents No. 2,302,137 and No. 2,328,397. The forks of a forklift must be wedged beneath such a pallet to lift it, and a lift with special chisel forks must be used, or in some cases, the pallet must be pulled onto the fork arms using a special load-pulling device. This chiseling often damages the goods and the load-pulling device requires the use of a very high sheer strength corrugated material, which is quite expensive.

Inflatable pallets, such as those described in U.S. Patents No. 3,440,976; No. 3,790,010 and No. 3,913,964 may overcome some of the above problems with palletized materials. However, such pallets must still be left with the load during shipping or until the

articles are used, and these pallets tend to be expensive, increasing handling and storage costs.

The aim of the present invention is to provide an inexpensive, easy-to-use apparatus for providing the required separation between stacked materials or articles for the insertion of the arms of a forklift. The invention also aims to obviate the requirement for storing loads on pallets or bolsters in order to provide sufficient separation for the fork arms. Instead, the layers of stacked materials or articles need only be separated by conventional 2.5 cm. high stickers or other dunnage placed therebetween. The invention also aims to obviate any requirement for fork arms which are designed to be wedged between the layers of stacked articles or materials for separation thereof and to avoid the damage and problems normally produced thereby.

The apparatus according to the invention includes an elongated, inflatable bladder which is relatively rigid in the direction of elongation. Rigidity is provided preferably by a skid to which the bladder is secured but may be provided by a reinforcing material in the bladder itself. In its uninflated condition, the bladder and skid together typically are no higher than the thickness of a typical sticker. A valve is provided for inflation of the bladder, and an aspirator and another valve are provided for deflation of the bladder. When the bladder is inflated, it has a vertical dimension greater than the thickness of typical forklift arms. Stacked articles placed thereon are raised a similar distance. Elastic straps tension the bladder in the direction of elongation to collapse it to the desired height and to secure it to the skid. The straps have sufficient elasticity to allow inflation of the bladder while tensioning the bladder and retaining the bladder in a fully extended position on the skid. In use, the skid and bladder are inserted between two stacked articles in the space provided by the stickers, and the bladder is inflated. The fork arms may then be inserted between the layers of articles for lifting and moving of the articles. When the operation has been completed, the bladder is deflated and recovered for use elsewhere. Either two apparatus or one apparatus and a bolster may be used for this purpose.

This apparatus of the invention can also be used for offloading articles onto stacks thereof or onto a level surface without the need of pallets. In this instance, the skid is placed on the surface upon which the articles are to be placed. The bladder is then inflated to its desired height, and the articles are placed thereon by the forklift. The fork arms are withdrawn in the space provided by the inflated bladder, and the bladder is then deflated, allowing the articles to come to rest where desired. Thereafter, the apparatus may be removed for use elsewhere. This same result can be achieved by using a single apparatus in conjunction with a movable bolster. Thus, either a single apparatus or one pair of this apparatus can be used for offloading or onloading a large quantity of material, and they need not thereafter be left with the articles, as is the case with pallets.

Further features and advantages of this invention will be more clearly appreciated from the following detailed description of an exemplary embodiment taken in conjunction with the accompanying drawings in which:

Figure 1 is a pictorial view of the apparatus of this invention in an inflated condition;

Figure 2 is a top view of the apparatus of Figure 1;

Figure 3 is a cross-sectional side view of the apparatus of Figure 1;

Figure 4 is a cross-sectional view of the apparatus of Figure 1 in an inflated condition; and

Figure 5, 6 and 7 illustrate the use of the apparatus of Figure 1 in one application thereof.

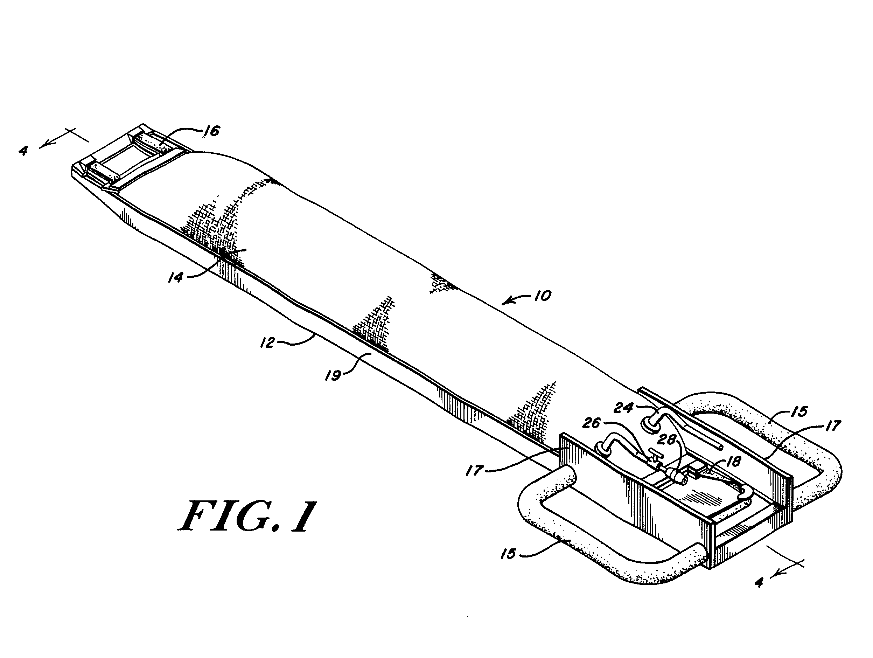

With reference to the drawings and more particularly to Figures 1 to 4 thereof, apparatus 10 of this invention includes an inflatable bladder 14 elongated in one direction and resting on a skid 12. Bladder 14 is typically secured to one end of the skid 12 by adjustable nonelastic straps 16 and to the opposite end of the skid 12 by elastic strap 18. Bladder 14 is sealed at each end, typically by plates 20 which are bolted together. An inflation valve 24, a deflation valve 26 and an aspirator 28 are provided at one end of bladder 14.

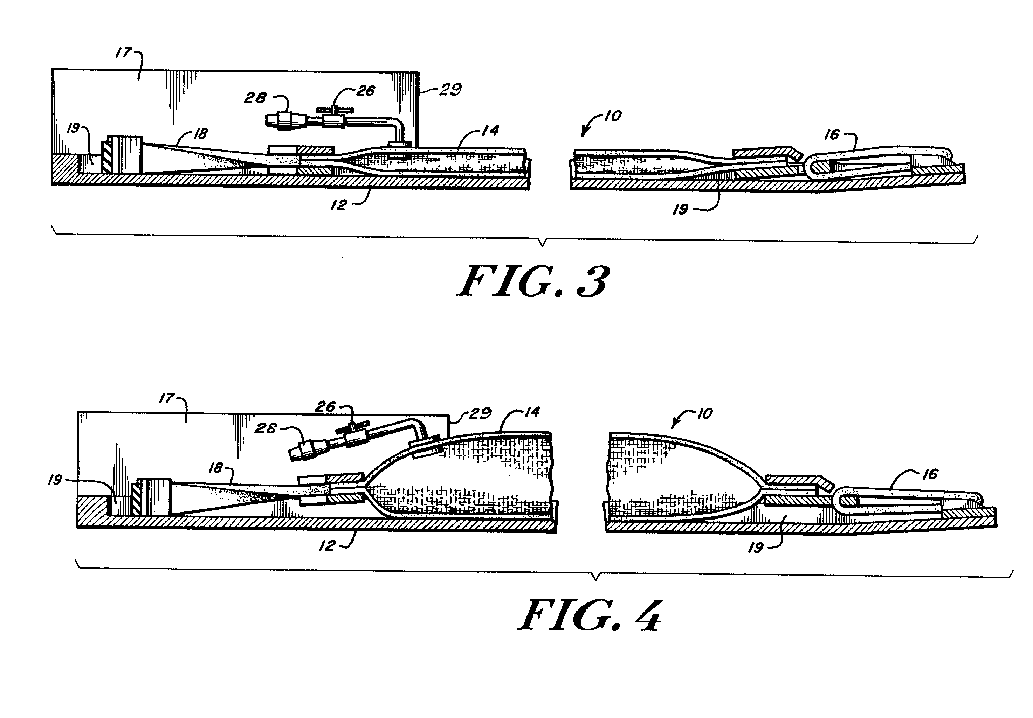

Straps 16 and 18 are secured to the plates 20 typically either by bolts or by slots 22. Straps 16 and 18 ensure that the bladder 14 is tightly stretched between the two ends of the skid 12 to collapse it down to the required height when deflated and to maintain it in a desired orientation, whether it is deflated as shown in Figure 3 or inflated as shown in Figure 4. Strap 18 is sufficiently elastic to permit the longitudinal shrinkage that occurs as the bladder 14 is inflated and to still maintain the desired tension on the bladder when deflated so that it is tightly stretched on the skid 12 and does not have portions thereof that extend above the desired height. Strap 16 has a buckle 11 for adjustment of the tension on the bladder 14.

In its uninflated condition, the bladder 14 and the skid 12 together have a vertical height no greater than that of a typical sticker which is about 2.5 cm., excluding the height of the inflation valve 24, deflation valve 26 and aspirator 28. Typically, the vertical height of the apparatus 10 when the bladder 14 is deflated is about 1.25 cm. When inflated, the bladder 14 and the skid 12 together must have a vertical height at least equal to the thickness of a typical forklift arm, typically about 7.5 to 12.5 cm. The inflation valve, the deflation valve and the aspirator usually are not placed in the narrow space between the stacked articles or materials, but extend beyond the stacked articles or materials for easy access thereto during operation of the apparatus. Therefore they are not subject to the height restrictions imposed on the remainder of the apparatus.

Skid 12 is preferably flat and rectangularly shaped, and possesses sufficient rigidity to prevent it from buckling under the stresses caused by inflation of the bladder. The skid provides a structure sufficiently rigid to be pushed into the 1.5 to 2.5 cm. high space between stickers or other dunnage. The skid may be made of metal, wood or any other suitable material. Skid 12 preferably is formed of thin sheet metal about 3 mm. gauge and the required rigidity is provided by 1.25 cm. high side walls 19 which extend the length of the skid. Walls 17 may also be provided on either lateral side of the skid 12 adjacent the inflation valve 24, deflation valve 26 and aspirator 28 for protection thereof. Walls 17 extend from the end adjacent the valves toward the opposite end of the skid to the point where the valves enter the bladder. Walls 17 typically have a height generally equal to the height of the valves above the bottom of the skid. Vertical surfaces 29 of the walls 17 act as stops which engage the projecting edge of the stacked articles or materials to prevent the skid from being pushed into the space between them beyond that point to protect the valves. A handle 15 may optionally be provided on each lateral side of the skid on the end thereof adjacent the valves. Handles 15 permit easy handling and insertion and withdrawal of the skid from the stacked articles. A typical skid length is 1.75 m. to 2.25 m. and a typical skid width is 17.5 to 22.5 cm. The end of the skid 12 adjacent the straps 16 may be provided with a slight upward or angular tilt, as shown in Figure 3, to facilitate entry of the skid 12 into the vertically narrow spaces provided by the stickers or dunnage between the articles. Also, this upward tilt ensures that the bladder 14 inflates evenly along its length without deformation at its ends, by applying a nearly horizontal tension to the bladder. This upward tilt is very small, and the thickness of wall 19 tapers as it nears the tilted end of the skid so that the top of wall 19 never is higher than 1.25 cm. above the surface upon which the skid rests. Although the skid 12 is shown disposed below the bladder 14, it could also be placed above the bladder 14 and could be provided with longitudinally extending vertical support walls to provide greater strength thereto. In addition, two skids may be used, one disposed above the bladder and one disposed below, to capture the bladder therebetween for protection thereof.

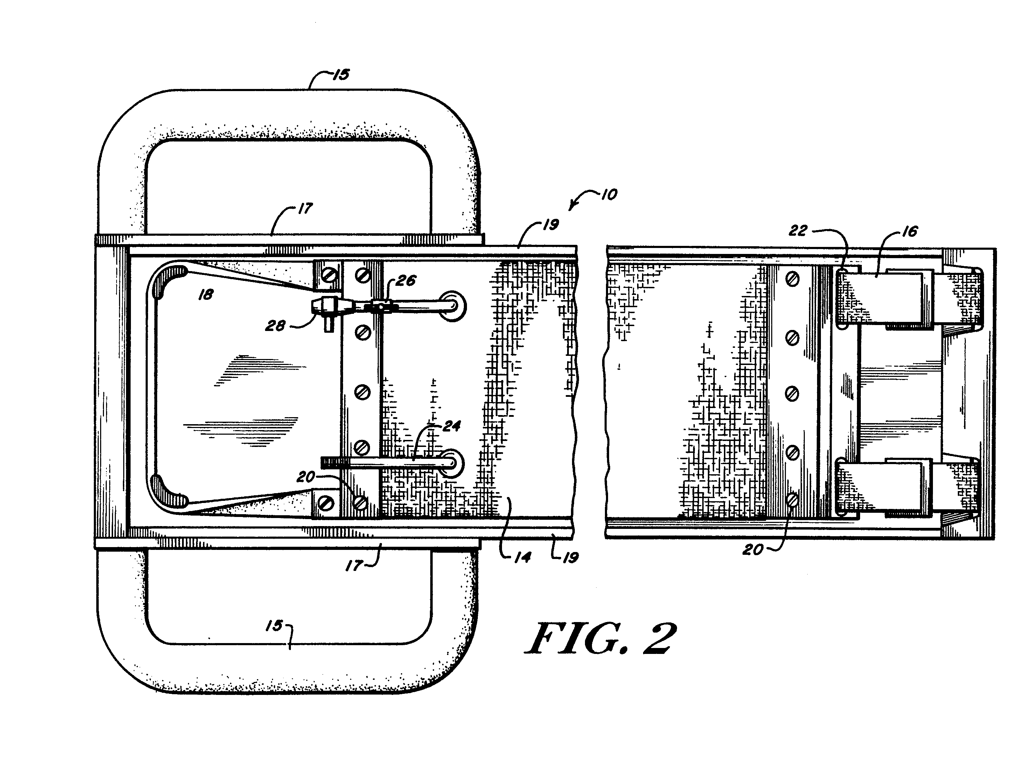

Bladder 14 may be formed of either an elastic material or a nonelastic material. In either event, it must be capable of being compressed into a small vertical thickness when deflated and be capable of expanding to a vertical height at least equal to the thickness of a fork arm when inflated. If the bladder is not formed of an elastic material, it preferably folds when deflated into a bundle having the desired height and a width no greater than that of the skid, as shown in Figure 2. Bladder 14 may alternatively be formed from a woven fabric surrounding an elastic interior bladder, the interlocking fibres providing the necessary expansion when inflated. Bladder 14 is preferably cylindrical when inflated, although it may also be oval, rectangular or triangular in cross-section. Typically, the bladder has a 10 to 12.5 cm. diameter when inflated, and a 0.9 cm. thickness when deflated, and it is capable of withstanding 13 or more atmospheres pressure. The apparatus of this invention alternatively may be formed using only a bladder and no skid. In this event, one wall of the bladder must be formed of a rigid material to impart the necessary structural strength and rigidity thereto.

The inflation valve is a one-way valve, such as a conventional tyre valve, which closes when gas pressure is not applied thereto from an external source, while the deflation valve may be a petcock. The aspirator provides means for evacuating the bladder to allow it to lie flat and to prevent trapping of air therein. Typically, compressed air is used for inflation of the bladder although other gases or liquids may be used. In addition, a single two-way valve may be used for inflation and deflation instead of the dual valves illustrated herein.

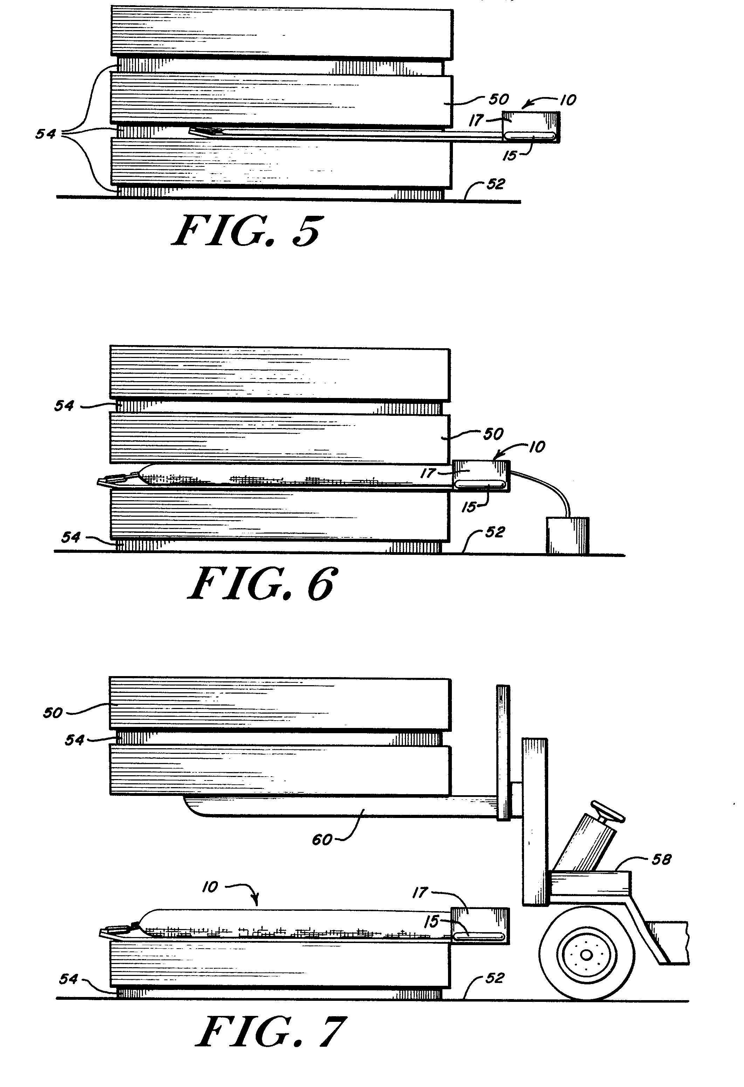

With reference now to Figures 5, 6 and 7, use of

0088506

-12-

the apparatus of this invention will be described. A plurality of stacked items of material or articles 50, such as lumber and the like, are illustrated in Figure 5 resting on a lower support 52, such as the floor. Each article 50 or each group of articles 50 is separated by a plurality of spaced, horizontal wooden stickers 54 or the like arrayed along the horizontal extent of the stacked articles. Apparatus 10 of this invention, in its uninflated condition, is slid into the space between the stacked articles created by the stickers 54, as shown in Figure 5. Typically, two apparatus 10 are utilised, each spaced from the other a horizontal distance approximately equal to the spacing between the fork arms of a forklift. Inflation valve 24 is then coupled to a source of compressed gas 56 for inflation of the apparatus 10. During this period of time, the deflation valve 26 is placed in a closed position to prevent leakage therethrough. Both apparatus 10 are then inflated, either simultaneously or sequentially until the articles 50 above the device are raised from the articles 50 below the apparatus the desired vertical distance. The inflation valve then closes to retain the gas within the bladder 14, and the source of compressed gas is removed. A forklift 58 is then deployed, the arms 60 of which are inserted into the vertical space created by the apparatus for lifting the articles 50, as shown in Figure 7. When this procedure has been completed, deflation valve 26 is opened and bladder 14 is deflated by the aspirator 28 to the condition shown in Figure 1, and both apparatus 10 are recovered.

Alternatively, only one apparatus may be used together with a bolster having a height generally equal to or less than the inflated height of apparatus 10 to achieve the same result. One side of the stack is raised first using the apparatus as described, after which the bolster is inserted into the space created. Thereafter, the apparatus is deflated, removed to the opposite side of the stack and inserted and inflated. The forklift is then deployed to lift the stack, as shown in Figure 7.

Apparatus 10 may also be used for offloading, merely by reversing the steps of the above procedure. Thus, after stickers 54 have been put in place on lower support 52 a pair of apparatus 10 of this invention may be placed in a horizontally spaced, parallel position on top of support 52 and inflated as shown in Figure 7. A forklift may then deposit articles 50 on top thereof, after which the arms 60 of the forklift 58 are withdrawn. Both apparatus 10 are then deflated by means of their valves 26 and aspirators 28 until the bladder 14 no longer bears against the underside of the articles 50. At this point, the skid 12 and the bladder 14 may be withdrawn from between articles 50 and support 52. Alternatively, a single apparatus in conjunction with a bolster may be used in place of two apparatus to offload a stack of articles or materials, in a manner similar to that described for onloading. A bolster is placed on support 52 and an apparatus 10 is placed on support 52 in spaced relation thereto. The articles 50 are then deposited on the bolster and apparatus 10, and the fork arms 60 are withdrawn. Apparatus 10 is then deflated, removed and inflated adjacent the bolster. The bolster is removed and the apparatus 10 is deflated and withdrawn from between articles 50 and support 52.

The apparatus of this invention is most advantageously used for stacking and unstacking lumber which is separated vertically by stickers which are approximately 2.5 cm. thick and 5 cm. wide and 1½ to 2 m. long. Since an entire stack of lumber normally cannot be lifted at once by a forklift, the apparatus of this invention may be used to separate and lift sections of the stacked lumber as desired. The approximately 1.25 cm. vertical dimension of the apparatus, when deflated, permits it to be used in most lumber stacking applications, as well as for stacking other unpalletized materials such as plywood or hardboard. The arms of a forklift need not be wedged between the stacked materials, and thus damage thereto is prevented. Permanent storage on pallets and bolsters is obviated, permitting a greater amount of material to be stacked in a given vertical space. Storage costs are reduced because of the greater amount stored in the available area and because expensive pallets need not be stored with the goods. The apparatus of this invention also permits loads resting on corrugated sheets which have been stapled to 2.5 cm. by 5 cm. stickers to be removed from the floors of trailers, railcars or storage areas with nonpowered lowlift hand trucks, a feature which is not possible with any existing material handling system. In addition, because 2.5 cm. by 5 cm. stickers can be used between each article of a stack, many different items may be stored on top of one another in the same stack, without the need of pallets.

The above described embodiment is exemplary, and modifications thereof are possible within the scope of this invention as defined in the appended claims.

Claims

1.    Apparatus for providing a desired vertical separation between articles normally stacked with a minimum vertical separation, said apparatus being characterised by the following combination:-

a)    a movable, elongated, inflatable bladder (14) having a vertical dimension in a deflated condition less than said minimum vertical separation;

b)    means (12) for providing rigidity to said bladder in its direction of elongation, for enabling insertion of said bladder between the articles;

c)    means (24, 26) for inflating said bladder to an inflated condition, said bladder having a vertical dimension in its inflated condition at least equal to said desired vertical separation, and for deflating said bladder to return said bladder to its deflated condition for enabling recovery of said bladder from between the articles.

2.    Apparatus according to claim 1, characterised in that said means imparting rigidity comprises a relatively rigid skid (12) elongated in the direction of elongation of said bladder (14) and means (16, 18) for securing said bladder to said skid.

3.    Apparatus according to claim 2, characterised in that said securing means includes means (18) for tensioning said bladder in said direction of elongation.

4.    Apparatus according to claim 1 or claim 2 or claim 3, characterised in that an end of said skid (12) spaced from said inflating and deflating means (24, 26) is angularly disposed upwardly towards said bladder (14) with respect to the direction of elongation of said bladder.

5.    Apparatus according to any of claims 1 to 4, characterised in that said minimum vertical separation is less than 2.5 cm.

6.    Apparatus according to any of claims 1 to 5, characterised in that said desired vertical separation is no less than the thickness of a forklift arm (60).

7.    Apparatus according to any of claims 1 to 6, characterised in that said bladder (14) comprises an elastic tube having sealed ends.

8.    Apparatus for providing a desired vertical separation between articles normally stacked with a minimum vertical separation, said apparatus being characterised by the combination of:-

a)    an elongated generally rigid skid (12);

b)    an elongated, inflatable bladder (14) secured to said skid, said skid and said bladder together having a vertical dimension in a deflated condition less than said minimum vertical separation;

c)     means (18) for tensioning said bladder on said skid in its direction of elongation;

d)     valve means (24) for permitting inflation of said bladder to an inflated condition, said bladder having a vertical dimension in its inflated condition at least equal to said desired vertical separation;

e)     means (26) for deflating said bladder to return said bladder to its deflated condition for permitting recovery of said bladder and said skid from a space between the articles (50);

f)     means (15) for grasping said skid for insertion of said skid and said bladder into a space between the articles; and

g)     stop means (29) for limiting the distance said skid and said bladder are insertable into a space between the articles for ensuring that said valve means and said deflating means remain outside of the space between the articles.

9.     A method for selectively unstacking by means of a forklift (58) having fork arms (60) a plurality of vertically stacked articles (50) having an initial vertical separation or underspace less than the thickness of a fork arm (60) of the forklift (58), said method being characterised by the steps of:-

a) sliding into at least one of the initial vertical separations at least one deflated bladder (14) having a thickness less than the initial vertical separation or underspace;

b) inflating the bladder or bladders to increase the separation or underspace to a second value, the second value of the vertical separation or underspace being greater than the thickness of the fork arms of the forklift; and

c) inserting the fork arms of the forklift into the increased vertical separation or underspace for lifting of the articles (50) above the increased vertical separation or underspace where the fork arms are inserted.

10. A method for selectively stacking articles characterised by the steps of:-

a) placing upon a surface (52) upon which the articles (50) are desired to be stacked at least one inflated bladder (14) having a vertical height when inflated greater than the thickness of fork arms (60) of a forklift (58);

b) placing the articles onto the bladder or bladders using the fork arms of the forklift;

c) inserting beneath the articles at least two

0088506

-20-

article separating means (54) having a vertical thickness less than that of the fork arms of the forklift and greater than a vertical dimension of the bladder or bladders when deflated;

d)    withdrawing the fork arms from beneath the articles;

e)    deflating the bladder or bladders; and

f)    withdrawing the bladder or bladders from beneath the articles.

FIG. 1

0088506

*FIG. 2*

0088506

*FIG. 3*

*FIG. 4*

FIG. 5

FIG. 6

FIG. 7

# 0088506

European Patent
Office

**EUROPEAN SEARCH REPORT**

Application number

EP 83 30 0453

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y,A | DE-U-7 019 497 (LICENTIA PATENT-VERWALTUNGS-GMBH) * Claim 1 ; page 3, lines 14-25 * | 1,8-10 | B 65 G 59/00 B 65 G 7/02 B 65 G 57/00 B 66 F 3/35 |
| | --- | | |
| Y,A | DE-C-1 153 031 (MABEG MASCHINENBAU GMBH) * Claim 1 ; column 3, line 12 - column 4, line 5 ; figures 1, 2 * | 1,8-10 | |
| | --- | | |
| Y,A | US-A-3 799 504 (VAUGHEN) * Figure 5 * | 1,2,8 | |
| | --- | | |
| Y,A | DE-C- 344 208 (BÖHM) * Figures 2-6 * | 1,8 | |
| | --- | | |
| Y,A | WO-A-7 900 753 (JONSEREDS AB. et al.) * Page 8, lines 1-18 * | 1,8 | TECHNICAL FIELDS SEARCHED (Int. Cl. ³) |
| | --- | | |
| D,A | US-A-2 302 137 (NEUMAN) | | B 65 G 7/00 B 65 G 57/00 B 65 G 59/00 B 65 G 61/00 B 65 H 3/00 B 66 F 3/00 B 66 F 15/00 |
| | --- | | |
| D,A | US-A-3 790 010 (STIRLING et al.) | | |
| | --- | | |
| A | US-A-3 913 764 (STIRLING et al.) | | |
| | --- | | |
| A | US-A-2 854 150 (SHEA) | | |
| | --- -/- | | |

The present search report has been drawn up for all claims

| Place of search BERLIN | Date of completion of the search 20-04-1983 | Examiner SIMON J J P |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

0088506

European Patent Office

**EUROPEAN SEARCH REPORT**

Application number

EP 83 30 0453

| DOCUMENTS CONSIDERED TO BE RELEVANT | | | Page 2 |

| Category | Citation of document with indication, where appropriate, of relevant passages | Relevant to claim | CLASSIFICATION OF THE APPLICATION (Int. Cl. ³) |
|---|---|---|---|
| A | US-A-3 466 010 (JUNG) | | |
| | ----- | | |
| | | | **TECHNICAL FIELDS SEARCHED (Int. Cl. ³)** |

The present search report has been drawn up for all claims

| Place of search BERLIN | Date of completion of the search 20-04-1983 | Examiner SIMON J J P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82